# EUROPEAN PATENT APPLICATION

(11) **EP 1 657 552 A1**
(43) Date of publication of application: **17.05.2006**
(21) Application number: 04257053.1
(22) Date of filing: 12.11.2004
(51) Int. Cl.: G01N 35/02

(54) **Vessel loading/unloading**

(71) Applicant: The Automation Partnership (Cambridge) Limited, Royston, Hertfordshire SG8 5WY (GB)
(72) Inventor: Owen, Stephen, Boum Cambridge CB3 7TZ (GB)
(74) Representative: Brunner, Michael John

(57) **Abstract**

Apparatus is described for loading or unloading a vessel, say a flask, (50) on to or from a selected position on a support (10) arranged to oscillate substantially in a plane. The apparatus includes a transporter (2) in the form of a robotic arm having a gripper unit (20) for gripping the flask. A mechanism, preferably a flexible restraint mechanism (13), is arranged to accommodate lost movement between the transporter and the support when the gripper unit releases or grips the flask to load it on to or unload it from the support respectively.

## Description

The present invention relates to apparatus and methods for loading and unloading cell culture vessels and the like (eg, Erlenmayer flasks) on to or off an oscillating support such as found in a cell culture system incubator.

For use in incubators, platform shakers are often used, providing one or more trays or shelves on which cell culture vessels can be placed within the incubator, the trays or shelves being capable of being independently shaken in an oscillating manner.

In our EP application no. 04254885.9 we describe an incubator, for example for a cell culture system, the incubator being arranged to handle a plurality of vessels and including a rotatable support defining a plurality of support locations for vessels at predefined positions around an upright axis and being rotatable around the upright axis to move the vessels between a number of positions about the axis; a drive transmission system for connecting the support to a drive motor, whereby the support can be rotated to a desired position for loading or unloading of a vessel to or from a respective support location; and a drive mechanism operable to move each support location eccentrically about an axis independently of the rotation of the support about the upright axis, whereby vessels disposed on the support can be shaken.

It is desirable to avoid starting and stopping the shaking/oscillation of the vessel support(s) in an incubator of such a type, or of other common type, where the or each support holds a number of vessels which are shaken together. In this context, the term 'oscillation' includes orbital motion as well as reciprocal motion in a single dimension. Not only does frequent starting and stopping reduce the actual time spent shaking the contents of all the vessels on the support unpredictably, ie. especially those which otherwise are not being unloaded or unloaded, but it also adds wear to the driving mechanism.

According to the present invention there is provided for loading or unloading a vessel on to or from a selected position on a support arranged to oscillate substantially in a plane, the apparatus including
a transporter having a gripping mechanism for gripping a vessel to hold the vessel; and
a mechanism arranged to accommodate lost movement between the transporter and the support when the gripping mechanism releases or grips the vessel to load it on to or unload it from the support respectively.

Such an apparatus allows vessels to be loaded and unloaded without stopping the oscillation of the support (or the supports if there are multiple supports oscillating together, eg. driven by the same drive mechanism).

The mechanism arranged to accommodate lost movement between the transporter and the support is preferably mounted on the support at the selected position and may be a flexible restraint mechanism. Such a flexible restraint mechanism may include a plurality of spring elements disposed to surround the support to engage and hold a vessel when it has been loaded on to the support. The flexible restraint mechanism is preferably arranged to hold the lower end of a vessel.

Alternatively or additionally, mechanism arranged to accommodate lost movement between the transporter and the support may include a mounting plate on the support arranged to support a vessel directly, the mounting plate being flexibly mounted for limited movement substantially parallel with the planar oscillating movement of the support. Preferably a means for holding the mounting plate in fixed position during loading or unloading of a vessel is provided.

The mechanism arranged to accommodate lost movement between the transporter and the support may alternatively be mounted on the transporter, preferably on the gripping mechanism.

Additionally, the gripping mechanism may be arranged to synchronise at least partially with the oscillatory movement of the support during loading or unloading.

Preferably the transporter includes a robot with a robotic arm carrying the gripping mechanism.

The invention also includes a method of loading or unloading a vessel on to or from a selected position on a support oscillating substantially in a plane, using a transporter having a gripping mechanism for gripping a vessel to hold the vessel, the method comprising
in the case of loading, engaging the vessel with a mechanism arranged to accommodate lost movement between the transporter and the support and thereafter releasing the vessel from the gripping mechanism whereby the vessel is released on to the support; and,
in the case of unloading, gripping the vessel by the gripping mechanism to remove the vessel from the support, the movement of the gripper mechanism relative to the support being accommodated by the mechanism to accommodate lost movement between the transporter and the support.

Two examples of apparatus according to the present invention will now be described in reference to the accompanying drawings, in which:
Figures 1A & 1B are plan and side views respectively of an incubator as described in our EP application no. 04254885.9;
Figure 2 is a perspective view of a part of an incubator flask support; and
Figure 3 is perspective view of part of a second support.

The incubator 1 shown in the drawing includes a housing 4 in order to enable a controlled environment to be maintained and adjusted. The incubator housing 4 includes a slidable access panel or door 41 through which a transporter in the form of a robotic arm 2 with a gripper unit 20 may be extended to load/unload culture vessels (Erlenmayer flasks) 50. On the opposite side, the housing has an operator access door 42. The robotic arm 2 is shown in both a top 2A and a bottom 2B position to show the range of vertical movement possible. For simplicity further details of the housing of the incubator are not shown in the drawings.

The incubator 1 includes a plurality of rotatable supports 10 in the form of pairs of rotatable rings 11', 11" defining, around their common axis, a series of support locations 12 for the culture vessels or flasks 50 in what is, effectively, a carousel 3. The vessels or flasks 50 may be of different sizes as shown on the different supports 10.

The plural inner rings 11' are fixed for movement together as are the plural outer rings 11 ". Upright frame elements 31 extend between adjacent rings 11', 11" to support one above another for movement together. The lowest support 10 includes a bearing 32 which allows the inner ring 11' to rotate within the outer ring 11 ", carrying with it the rings disposed above it. A first drive shaft 33 is driven through a transmission 34 by a motor 35 to rotate the inner set of rings 11' of the carousel 3 for loading/unloading of culture vessels or flasks 50. A second, tubular, drive shaft 39 surrounds the first drive shaft 33 and is driven through a transmission 37 by a motor 36 to rotate the outer set of rings 11" of the carousel 3 for loading/unloading of culture vessels or flasks 50. The drive shafts 39 and 33 are supported on respective bearings 39', 33' on upper and lower supporting bracket members 38, 38' respectively.

A bellows type flexible seal 43 seals the bottom of the housing 4 allowing the drive mechanisms and motors to be disposed in a separate, lower housing 5 disposed below and supporting the incubator 4. This separation simplifies the task of maintaining the required conditions within the incubator 1.

To shake or vibrate culture vessels or flasks 50 disposed on the supports 10 in the carousel 3, a drive motor 60 is connected via a pulley 61 to a drive belt 62 which is also passed around eccentrically mounted pulleys 63, 64 fixed on the underside of the top member 51 of the lower housing 5 and having respective eccentrics 65,66 attached to the upper support bracket member 38 to support the flask supports 10 for eccentric movement relative to the incubator housing 4 under the action of the motor 60.

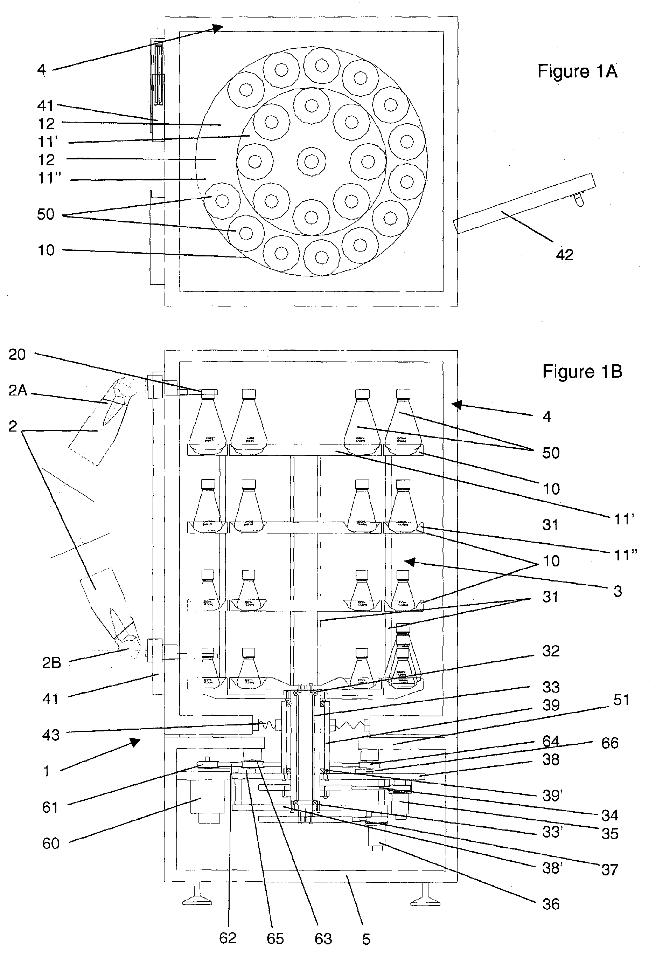

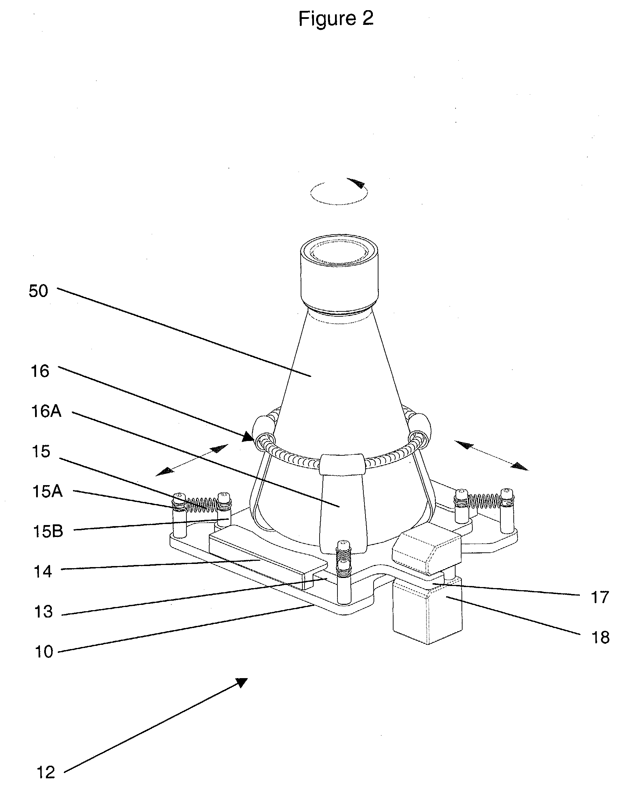

Figure 2 shows a modification of the system of Figure 1 (in accordance with the present invention) and, in particular, part of an incubator flask support 10 (as shown in Figures 1A & 1B), which moves, in use, in an orbital motion to shake flasks mounted on it as described above. Each support 10 provides a plurality of support locations 12 for flasks 50 as seen in Figures 1A & 1B (only one of which is shown in Figure 2). At each location 12 (only one of which is shown in Figure 2) a mounting plate 13 is provided on which the flask 50 is supported in use. Each mounting plate 13 is supported on the incubator support 10, on each side, between retaining brackets 14 (only two of which are shown) fixed to the top surface of the support 10 and is allowed to move parallel to the plane of the support, against the action of springs 15 carried between posts 15A & 15B on the support 10 and the mounting plate 13 to accommodate the oscillatory action of the support 10 and the lost motion arising therefrom between the support and the robotic arm 2 (not shown in Figure 2).

The mounting plate 13 carries a spring type clip-in holder 16 by means of which a flask 50 can be held in place on the mounting plate, the flask being pushed on to the plate between the spring clips 16A of the holder 16 and removable therefrom by lifting up between the clips under the controlled action of the gripper unit 20 of the robotic arm 2.

In order to allow a flask 50 to be loaded or unloaded, the mounting plate 13 can be held stationary above the support 10 (while the support continues to be oscillated) by means of an arm 17 on the mounting plate 13 which is clamped by a solenoid actuated clamp 18 when desired, the clamp being mounted and held stationary on a fixed, stationary, part of the incubator such as the housing or frame. An alternative, not shown, is for the robotic arm 2 to include a clamp or other mechanism to engage with the mounting plate 13 or a bracket or arm 17 attached to it to hold the mounting plate in fixed position.

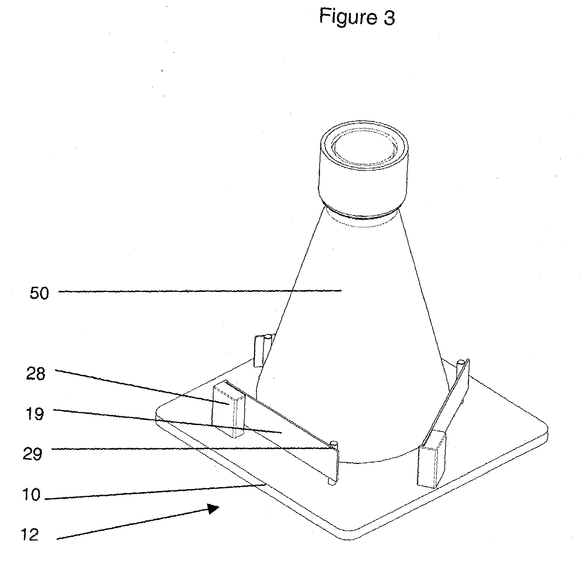

Figure 3 shows an alternative construction for each support location 12 (only one of which is shown). The support location 12 has a flexible restraint mechanism in the form of three leaf-spring arms 19 arranged in a substantially triangular arrangement on the support 10 providing flexibility to accommodate loading or unloading of a flask, the arms flexing as a flask is loaded or unloaded by the gripper unit 20. Preferably the gripper unit 20 tilts the flask 50 to ease loading or unloading. The leaf-spring arms are supported on fixed posts 28 and pre-loaded against abutments 29 to ensure sufficient clamping as soon as a flask is inserted between the arms.

In an alternative construction, not shown, the examples of figures 2 and 3 can be combined, the spring clip holder 16 of figure 2 being replaced by the spring-loaded arms 19 of figure 3.

In a further development or modification, the movement of the gripper unit 20 can be synchronised to the oscillating motion of the support 10 during the loading or unloading process so that the motion of the gripper unit 20 to move the flask into or out of the support location is then a simple component of movement (in two dimensions parallel to the plane of the support 10) relative to the support, the gripper unit 20 also tilting the flask as required under the action of the robotic arm 2. In practice, even with synchronism between the gripper unit 20 and the support 10, complete synchronism is unlikely to be achieved, so that it remains necessary to compensate for the lost movement as described above.

## Claims

1. Apparatus for loading or unloading a vessel on to or from a selected position on a support arranged to oscillate substantially in a plane, the apparatus including
a transporter having a gripping mechanism for gripping a vessel to hold the vessel; and
a mechanism arranged to accommodate lost movement between the transporter and the support when the gripping mechanism releases or grips the vessel to load it on to or unload it from the support respectively.

2. Apparatus according to claim 1, wherein the mechanism arranged to accommodate lost movement between the transporter and the support is mounted on the support at the selected position.

3. Apparatus according to claim 1 or claim 2, wherein the mechanism arranged to accommodate lost movement between the transporter and the support is a flexible restraint mechanism.

4. Apparatus according to claim 3, wherein the flexible restraint mechanism includes a plurality of spring elements disposed to surround the support to engage and hold a vessel when it has been loaded on to the support.

5. Apparatus according to claim 4, wherein the flexible restraint mechanism is arranged to hold the lower end of a vessel.

6. Apparatus according to claim 3, wherein the flexible restraint mechanism includes a mounting plate on the support arranged to support a vessel directly, the mounting plate being flexibly mounted for limited movement substantially parallel with the planar oscillating movement of the support.

7. Apparatus according to claim 6, including means for holding the mounting plate in fixed position during loading or unloading of a vessel.

8. Apparatus according to claim 1 or claim 3 when dependent on claim 1, wherein the mechanism arranged to accommodate lost movement between the transporter and the support is mounted on the transporter.

9. Apparatus according to claim 8, wherein the mechanism arranged to accommodate lost movement between the transporter and the support is mounted on the gripping mechanism.

10. Apparatus according to any of claims 1 to 6 or claim 9, wherein the gripping mechanism is arranged to synchronise at least partially with the oscillatory movement of the support during loading or unloading.

11. Apparatus according to any of claims 1 to 10, wherein the transporter is a robot having a robotic arm on which the gripping mechanism is mounted.

12. A method of loading or unloading a vessel on to or from a selected position on a support oscillating substantially in a plane, using a transporter having a gripping mechanism for gripping a vessel to hold the vessel, the method comprising
in the case of loading, engaging the vessel with a mechanism arranged to accommodate lost movement between the transporter and the support and thereafter releasing the vessel from the gripping mechanism whereby the vessel is released on to the support; and,
in the case of unloading, gripping the vessel by the gripping mechanism to remove the vessel from the support, the movement of the gripper mechanism relative to the support being accommodated by the mechanism to accommodate lost movement between the transporter and the support.
